(19) Europäisches Patentamt
European Patent Office
Office européen des brevets

(11) **EP 3 115 825 A1**

(12) **EUROPEAN PATENT APPLICATION**
published in accordance with Art. 153(4) EPC

(43) Date of publication:
**11.01.2017 Bulletin 2017/02**

(51) Int Cl.:
*G02B 23/24* (2006.01)     *G01N 21/88* (2006.01)

(21) Application number: **14884731.2**

(22) Date of filing: **05.03.2014**

(86) International application number:
**PCT/JP2014/055616**

(87) International publication number:
**WO 2015/132902 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The Chugoku Electric Power Co., Inc.**
**Hiroshima-shi, Hiroshima 730-8701 (JP)**

(72) Inventors:
• **WADA, Yasutaka**
  **Hiroshima-shi**
  **Hiroshima 730-8701 (JP)**
• **KUBOTA, Haruhito**
  **Hiroshima-shi**
  **Hiroshima 730-8701 (JP)**

• **YAMAMURA, Yukimasa**
  **Hiroshima-shi**
  **Hiroshima 730-8701 (JP)**
• **UCHIYAMA, Ichiro**
  **Hiroshima-shi**
  **Hiroshima 730-8701 (JP)**
• **OYAMA, Keiji**
  **Hiroshima-shi**
  **Hiroshima 730-8701 (JP)**
• **YAMASAKI, Toshiki**
  **Hiroshima-shi**
  **Hiroshima 730-8701 (JP)**

(74) Representative: **Osha Liang**
  **2, rue de la Paix**
  **75002 Paris (FR)**

(54) **GUIDE TUBE FOR GUIDING CABLE FOR INSIDE OBSERVATION DEVICE AND METHOD FOR GUIDING CABLE**

(57)     The observation image capturing part provided to the tip end of the cable of the internal observation device is made to smoothly approach the portion to be observed. For inserting into a pipe bore 41 a cable 2 of an internal observation device 1, the cable 2 is pushed into the pipe bore 41 to force an observation image capturing part 21 provided proximate a tip end of the cable to approach a portion to be observed 70 when performing internal observation of the pipe bore 41 of a pipelike structure 40 with the internal observation device 1. A guide tube 10 having an outside diameter substantially equal to an internal diameter of the pipe bore 41 to a degree that the guide tube 10 can be inserted in the pipe bore 41, and having an internal diameter substantially equal to an outside diameter of the cable 2 to a degree that the cable 2 can be inserted therein, is inserted into the pipe bore 41 that reaches the portion to be observed 70 and the cable 2 is inserted into a tube interior of the guide tube 10 from an outside of the pipe bore. There may be provided a curved part 12 proximate a tip end of the guide tube 10, the curved part 12 being configured to deflect a direction in which the tip end of the cable 2 that is inserted in a tube interior of the guide tube 10 is directed.

FIG. 5

**Description**

[Technical Field]

The present invention relates to a guide tube for guiding a cable of an internal observation device and a cable guiding method. In particular, the present invention relates to a technology for assisting to insert into a pipe bore a cable provided with an observation image capturing part for use during an internal observation of a pipelike structure.

[Background Art]

To perform a cost effective internal observation of a pipe, PTL 1 discloses that during internal observation of a pipe using an internal observation device such as a fiberscope or a videoscope, a flexible guide path through which a remote macroscopic inspection device passes is advanced and lead beforehand up to an entrance or proximate the entrance of the pipe along a guide means disposed up to an entrance or proximate the entrance of the pipe to be inspected and the guide path is further advanced and passed through the pipe, and guides the remote macroscopic inspection device after a suitable time with the guide path for guiding inside the pipe for internal observation of the pipe with the remote macroscopic inspection device. Hereby the guide path is lead to the entrance of the pipe to be observed with the guiding means while avoiding the guide path from wandering into an entrance of another pipe so that the guide path is advanced to enter the entrance of the pipe to be observed, then advanced into the pipe to be observed, and thereafter the remote macroscopic inspection device is passed through the guide path to reach the inside of the pipe to be observed thereby allowing internal observation of the pipe with the remote macroscopic inspection device.

[Citation List]

[Patent Literature]

[PTL 1] Japanese Laid-open Application No. H10-132187

[Summary of Invention]

[Technical Problem]

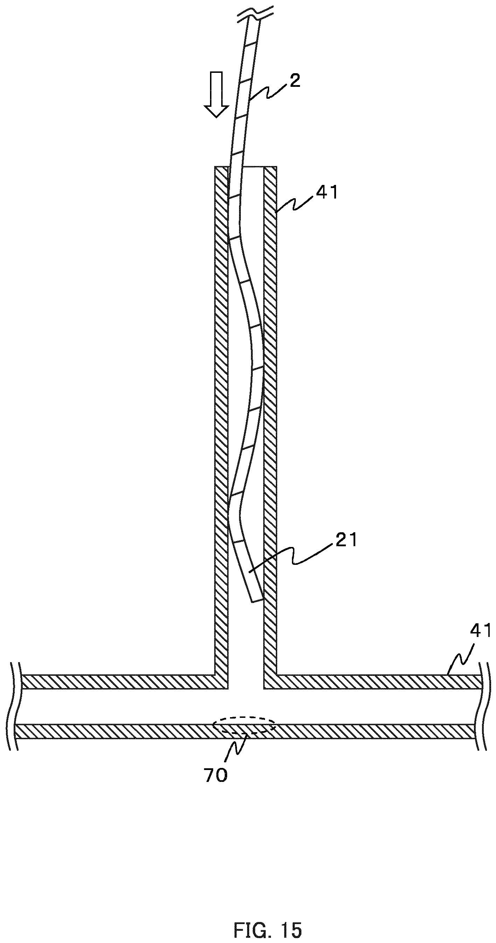

Cables for internal observation equipped to internal observation devices are continuing to become thinner in recent years and those having a diameter of a few millimeters have come out these days. However, the rigidity of cables has decreased along with the thinning of the cables which in turn are being the cause of issues. That is, during internal observation of the pipe 41, when the cable 2 is pushed in from the pipe 41 opening so that the observation image capturing part 21 that is provided to the tip end approaches the portion to be observed 70, the cable 2 would bend at a portion between the part between the cable 2 and the wall face of the pipe bore of the pipe 41 so to contact the inner wall face. And hereby the pushing force of the cable 2 is dispersed so that the pushing force is not well transmitted as the force to allow the cable 2 to proceed and thus making it difficult for the observation image capturing part 21 to approach the portion to be observed 70, as illustrated in Fig. 15.

The present invention has been made in view of the above circumstances and an objective thereof is to provide a guide tube for guiding a cable of an internal observation device and a cable guiding method that allows the observation image capturing part provided to the tip end of the cable of the internal observation device to smoothly approach the portion to be observed.

[Solution to Problem]

A main aspect of the present invention for achieving the above objective is a guide tube that guides a cable of an internal observation device, including the guide tube assisting to insert into a pipe bore a cable of an internal observation device, the cable being pushed into the pipe bore to force an observation image capturing part provided proximate a tip end of the cable to approach a portion to be observed when performing internal observation of the pipe bore of a pipelike structure with the internal observation device; and having a structure such that an outside diameter of the guide tube is substantially equal to an internal diameter of the pipe bore to a degree that the guide tube can be inserted in the pipe bore, and an internal diameter of the guide tube is substantially equal to an outside diameter of the cable to a degree that the cable can be inserted therein..

The present invention can prevent the cable from bending that allows the pushing force to be dispersed when the cable is pushed and inserted into the pipe bore thereby making it difficult for the cable to be smoothly pushed in.

Further, according to the present invention, the pushing force can effectively act on the cable as the advancement force of the cable so that the tip end of the cable can smoothly approach the portion to be observed. Hereby, the burden on the user during an internal observation of the pipelike structure can be greatly relieved. Additionally, the observation image capturing part of the cable can be easily sent deep inside the pipe of the pipelike structure so that the condition of the pipelike structure can be certainly and promptly confirmed. Further, indications of such as the blockage of the pipe bore can be detected in advance so that appropriate measures can be taken promptly.

Another aspect of the present invention includes the above guide tube that has a curved part included proximate a tip end of the guide tube, the curved part being configured to deflect a direction in which the tip end of the cable that is inserted in a tube interior of the guide tube is directed.

According to the present invention, the direction in which the cable advances when pushing in the cable is deflected toward the direction of the portion to be observed at the curved portion so that even when, for example, the cable needs to pass through the tee structure section of the pipe, the tip end of the cable can be made to pass through the tee structure section to smoothly approach the portion to be observed by a pushing operation from outside the pipe.

Another aspect of the present invention includes the above guide tube that has an internal diameter proximate the curved part made greater than internal diameters of other parts.

According to the present invention, even when the cable includes a stiff portion of a predetermined length, the cable can be passed through without the stiff portion being stuck at the curved portion so that the cable can be smoothly inserted through the pipe bore.

Another aspect of the present invention includes the above guide tube that has the internal diameter of the guide tube continuously change from the internal diameter of other parts to the internal diameter proximate the curved part.

The cable can be smoothly passed through the curved portion by avoiding a discontinuous portion to be formed to the portion where the internal diameter changes.

Another aspect of the present invention includes the above guide tube that has a tube axis of the tube interior decentered toward a direction opposite the direction in which the tip end of the cable is deflected at a portion besides the portion proximate the tip end of the guide tube.

According to the present invention, even when the cable should bend at the curved portion of the pipe bore so to reduce the radius of curvature of the cable, the frictional force operating between the cable and the wall face of the pipe bore of the piping decreases by allowing the cable to slide in the guide tube. And further, the pushing force can be effectively transmitted to the cable as the advancement force of the cable for the cable to be further smoothly inserted into the pipe bore by avoiding deformation of the cable.

Another aspect of the present invention includes the above guide tube wherein the guide tube includes an outside tube and an inside tube that is configured to be inserted in the outside tube, the outside tube has an outside diameter substantially equal to the internal diameter of the pipe bore to a degree that the outside tube can be inserted in the pipe bore, and an internal diameter of the outside tube is substantially equal to an outside diameter of the inside tube to a degree that the outside tube can have the inside tube inserted therein, the inside tube has an internal diameter substantially equal to the outside diameter of the cable to a degree that the cable can be inserted therein, and the inside tube has at a tip end thereof a holding structure for holding a part proximate the tip end of the cable that is inserted in a tube interior thereof.

Fixing the cable to the tip end of the inside tube with a holding structure allows a pushing force to be effectively transmitted to areas proximate the tip end of the cable when the inside tube is pushed into the outside tube. In this way, the portion of the cable to which a large frictional force acts, the portion being apart from the insert hole, can pass through without the cable bending so that the cable can be smoothly advanced to approach the portion to be observed also in the case of observing a portion distant from the insert hole using a long cable.

Other problems disclosed in the present application and the means for solving such problems will become clear from the description in the detailed description of the invention and the drawings attached.

[Advantageous Effects of Invention]

According to the present invention, the observation image capturing part that is provided to the tip end of the cable of the internal observation device can be made to smoothly approach the portion to be observed.

[Brief Description of the Drawings]

[Fig. 1]

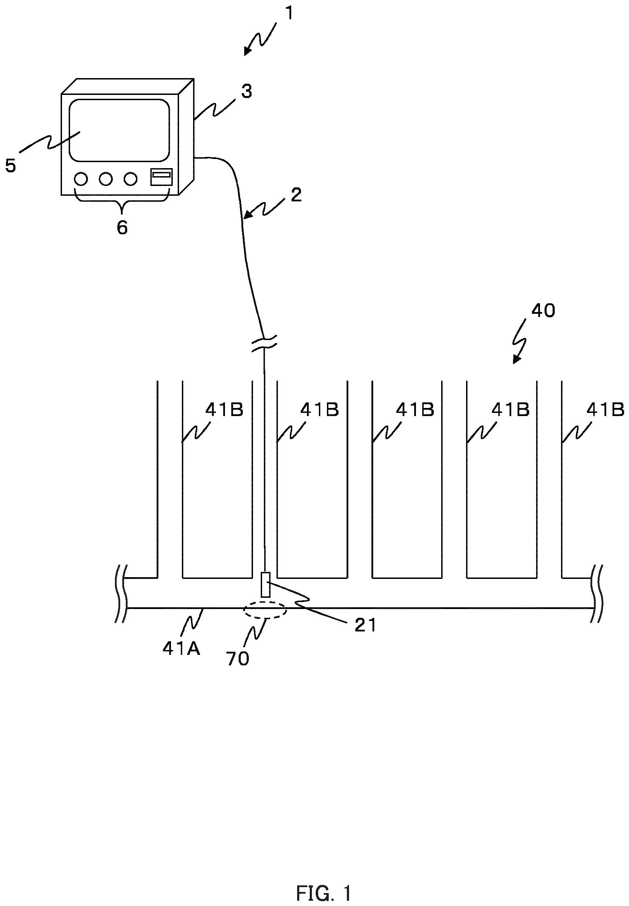

Fig. 1 is a diagram illustrating a schematic configuration of the internal observation device 1.
[Fig. 2]

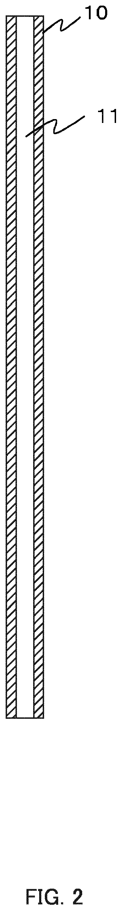

Fig. 2 is a sectional diagram of a guide tube 10 shown as the first embodiment.
[Fig. 3]

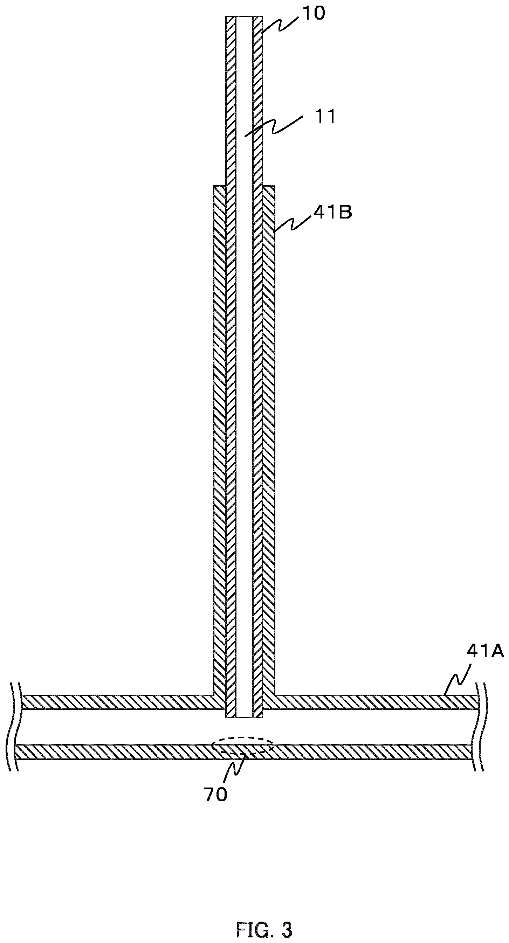

Fig. 3 is a diagram illustrating the guide tube 10 in a state inserted in the pipe 41.
[Fig. 4]

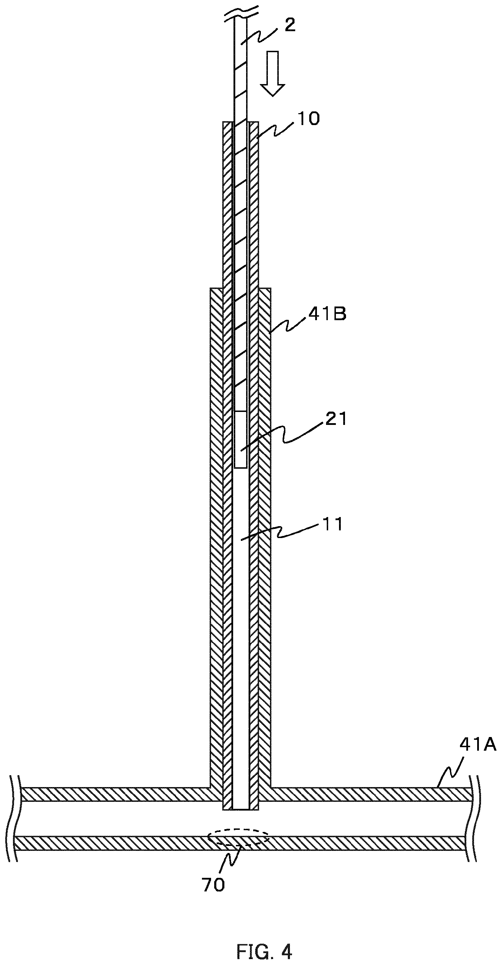

Fig. 4 is a diagram illustrating the way in which the cable 2 is pushed into the tube interior 11 of the guide tube 10.
[Fig. 5]

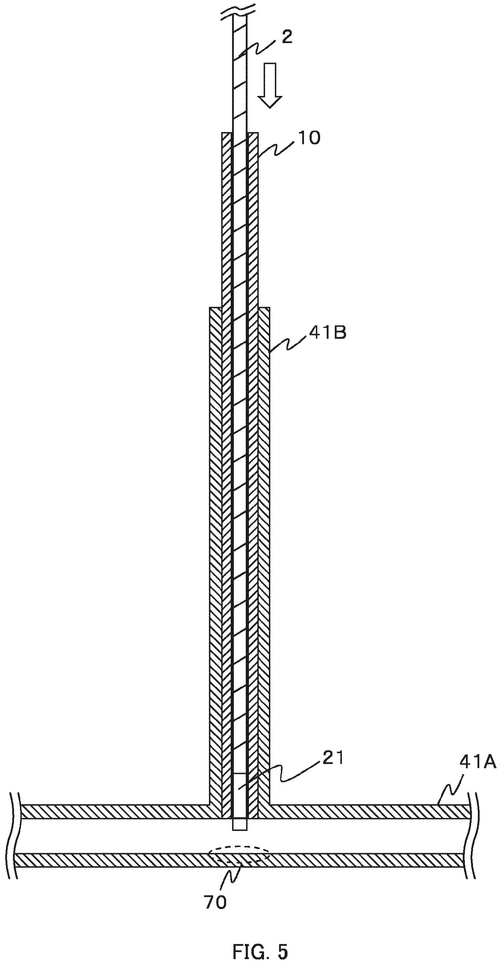

Fig. 5 is a diagram illustrating the tip end of the cable 2 in a state approaching the portion to be observed 70.
[Fig. 6]
Fig. 6 is a diagram illustrating the way in which the tip end of the cable 2 abuts against the wall face of the pipe 41 at the tee structure section.
[Fig. 7] Fig. 7 is a sectional diagram of a guide tube 10 shown as the second embodiment.
[Fig. 8]

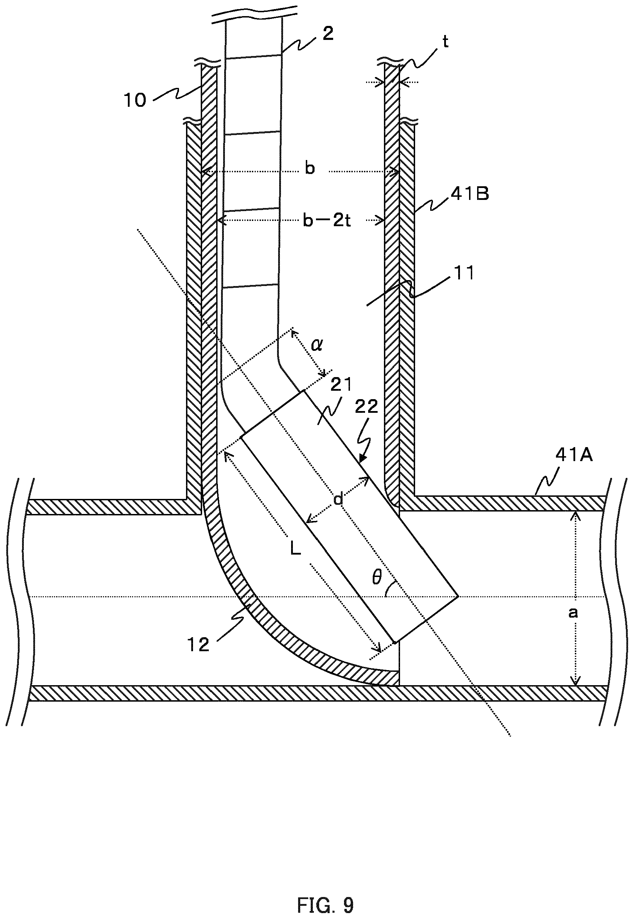

Fig. 9 is a diagram explaining the way in which the guide tube 10 shown as the second embodiment acts.
[Fig. 9]
Fig. 9 is a diagram illustrating the method of setting the internal diameter of the guide tube 10.
[Fig. 10]

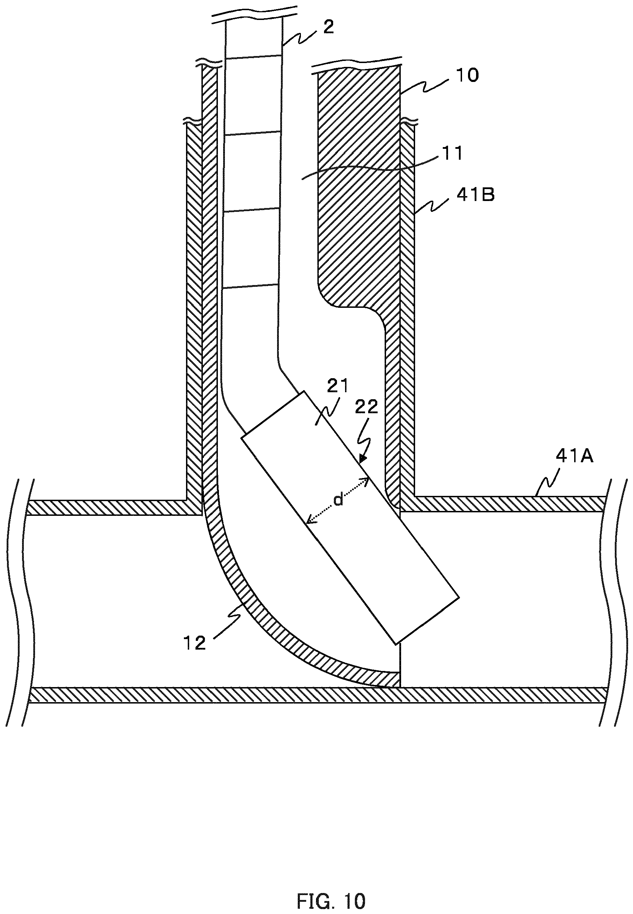

Fig. 10 is a diagram illustrating an example of the guide tube 10 having the tube axis of the tube interior 11 decentered.
[Fig. 11]

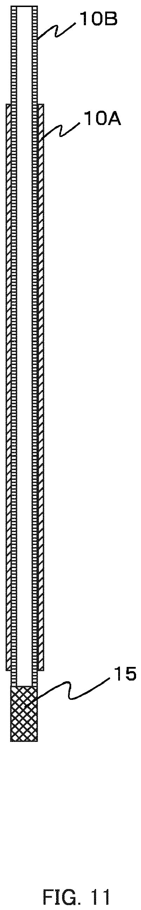

Fig. 11 is a sectional diagram of a guide tube 10 shown as the third embodiment.
[Fig. 12]

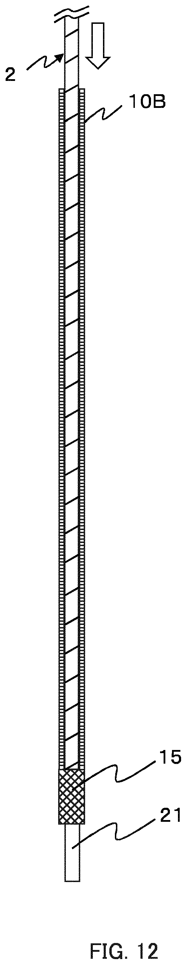

Fig. 12 is a diagram illustrating the cable 2 in a state inserted in the inside tube 10B.
[Fig. 13]

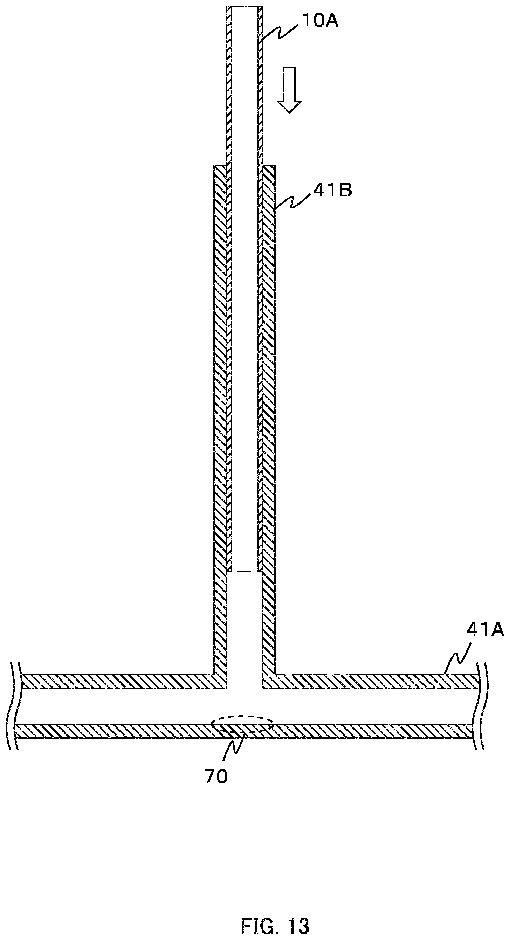

Fig. 13 is a diagram illustrating the outside tube 10A in a state inserted in the pipe bore of the pipe 41.
[Fig. 14]

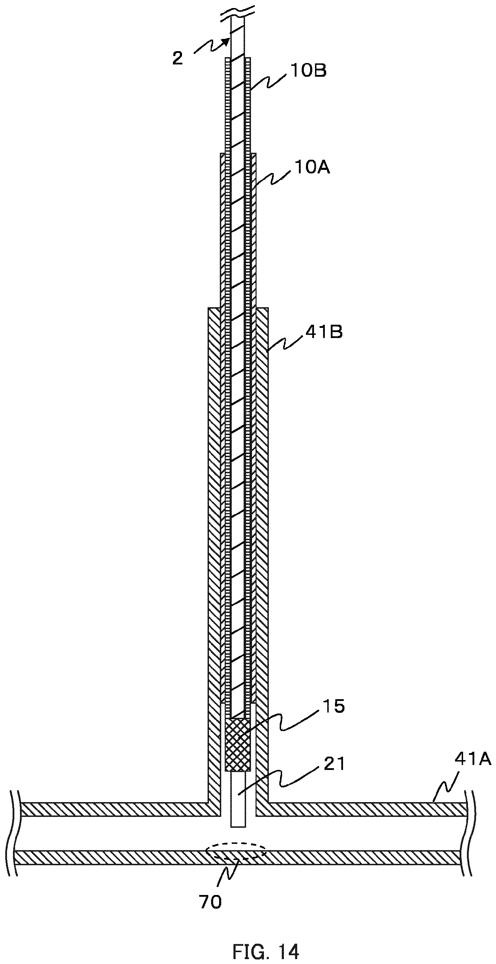

Fig. 14 is a diagram illustrating the inside tube 10B in a state inserted in the outside tube 10A.
[Fig. 15]
Fig. 15 is a diagram illustrating the cable 2 bending inside the pipe bore.

[Description of Embodiments]

The following describes in detail an embodiment with reference to the drawings. In the following description, the same or similar parts are attached similar reference numbers and duplicate explanation thereof may be omitted.

<First Embodiment>

Fig. 1 illustrates a schematic configuration of the internal observation device 1 (videoscope, fiberscope and the like) which are used for internal observation of a pipelike structure 40 (including pipes 41A, 41B) using the guide tube 10 shown as the first embodiment.

As illustrated in Fig. 1, the internal observation device 1 includes a cable 2 provided with an observation image capturing part 21 proximate one end thereof (hereinafter also called "tip end") and a main device 3 to which the other end (hereinafter also called "rear end") of the cable 2 is connected.

The main device 3 includes a central processing device (CPU, MPU and the like), a memory (ROM, RAM and the like), a display device 5 (liquid crystal panel, organic EL panel and the like) and an input device 6 (keypad, touch panel and the like.) And an image based on the observation image or an image signal supplied from the observation image capturing part 21 and transmitted through the cable 2 is reproduced and output.

When the internal observation device 1 is, for example, a videoscope, the observation image capturing part 21 includes, for example, a solid-state image sensing device (charge-coupled device (CCD), complementary metal oxide semiconductor (CMOS) and the like), and the cable 2 is, for example, a jacket coated metal cable that transmits to the main device 3 electrical signals of the observation image that are photoelectrically converted using the solid-state image sensing device. Further, when the internal observation device 1 is, for example, a fiberscope, the observation image capturing part 21 includes an optical element such as, for example, an eyepiece and the like and the cable 2 is, for example, a jacket coated optical fiber cable that transmits to the main device 3 as optical signals the observation image that has optical elements input.

During internal observation, the user inserts the cable 2 of the internal observation device 1 by hauling the cable 2 so that the cable 2 is pushed in from the opening of the pipe 41 that is communicated to the portion to be observed 70, in order to bring the observation image capturing part 21 of the cable 2 closer to the portion to be observed 70 in the pipe 41. Here, the guide tube 10 functions such that the cable 2 is prevented from bending in the pipe bore of the pipe 41 as well as that the pushing force applied to the cable 2 effectively acts on the cable 2 as the advancement force toward the portion to be observed 70.

Fig. 2 is a sectional diagram (sectional diagram showing the guide tube 10 cut along a face in the lengthwise direction thereof so to include the tube axis) illustrating a guide tube 10 shown as the first embodiment. The guide tube 10 is in a cylindrical form. The material of the guide tube 10 is such as resin, however, the material of the guide tube 10 is preferably selected to have a sufficiently high rigidity compared to the cable 2. Further, it is preferable that the lengthwise length of the guide tube 10 is at least the same or longer than the sum length obtained by adding the length from the opening of the pipe 41 being the insert hole for the cable 2 to the section required for allowing the observation image capturing part 21 of the cable 2 to smoothly approach the portion to be observed 70 and the length of the section that serves as the handle when inserting the cable 2 into the tube interior 11 of the guide tube 10.

The outside diameter of the guide tube 10 is substantially equal to the internal diameter of the pipe bore of the pipe 41 to a degree that the guide tube 10 can be inserted in the pipe bore of the pipe 41 through which the cable 2 is inserted, and the internal diameter of the tube interior 11 of the guide tube 10 is substantially equal to the outside diameter of the cable 2 to a degree that the cable 2 can be inserted therein. Here, the reason for setting the outside diameter of the guide tube 10 to be substantially equal to the internal diameter of the pipe bore of the pipe 41 to a degree that the pipe bore, of the pipe 41 through which the cable 2 is to be inserted, can have inserted the guide tube 10 is to prevent the guide tube 10 itself from bending when the cable 2 is inserted into the pipe bore. Further, the reason for the internal diameter of the tube interior 11 of the guide tube 10 being substantially equal to the outside diameter of the cable 2 is to prevent the cable 2 from bending when inserting the cable 2 into the guide tube 10.

Here, the diameter of the tube interior 11 of the guide tube 10 preferably has a dimension such that some space is secured between the outside diameter of the cable 2 so that the cable 2 can be smoothly inserted into the tube interior 11. Additionally, the material of the surface of the tube interior 11 of the guide tube 10 and the material of the surface of the cable 2 is preferably selected such that the friction coefficient between the two becomes small.

A user uses the guide tube 10 in the following manner during an internal observation of the pipelike structure 40. To be specific, the user firstly inserts the guide tube 10 into the pipe 41 before inserting the cable 2 into the pipe 41. Fig. 3 illustrates the guide tube 10 in a state inserted in the pipe 41. The cable 2 may be inserted in the pipe 41 together with the guide tube 10 or in this case, the cable 2 may be inserted in the guide tube 10 before inserting the guide tube 10 into the pipe 41.

Subsequently, the user pushes the cable 2 into the tube interior 11 of the guide tube 10 so to force the tip end of the cable 2 to approach the portion to be observed 70. Fig. 4 illustrates the way in which the cable 2 is pushed into the tube interior 11 of the guide tube 10 and Fig. 5 illustrates the tip end of the cable 2 in a state approaching the portion to be observed 70. The user performs an operation of focusing and the like with the main device 3 in the state shown in Fig. 5 and displays on the display device of the main device 3 the image taken from the observation image capturing part 21.

In this way, the use of the guide tube 10 prevents a situation where the cable 2 is bent to allow the pushing force to be dispersed when inserting the cable 2 into the pipe bore 21 thereby making it difficult for the cable 2 to be pushed in. Further, the use of the guide tube 10 allows the pushing force to effectively act on the cable 2 as the advancement force of the cable 2 so to thereby force the tip end of the cable 2 to smoothly approach the portion to be observed 70. Hereby, the burden on the user during internal observation of the pipelike structure 40 can be greatly reduced. Additionally, the observation image capturing part 21 of the cable 2 can be easily sent deep inside the pipe 41 of the pipelike structure 40 so that the condition of the pipelike structure 40 can be certainly and promptly confirmed. Further, indications of such as the blockage of the pipe bore can be detected in advance so that appropriate measures can be taken promptly.

<Second Embodiment>

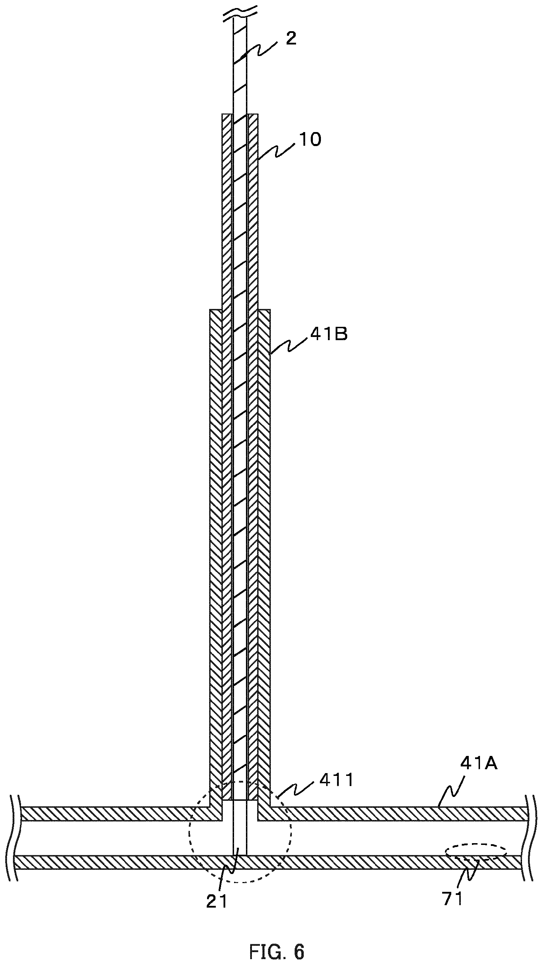

For example, when the portion to be observed 71 exists at a place further beyond the tee structure section 411 of the pipe 41, as illustrated in Fig. 6, the cable 2 would not be able to be further pushed in since the observation image capturing part 21 abuts against the wall face of the pipe 41 at the tee structure section 411 making it difficult for the observation image capturing part 21 of the cable 2 to approach the portion to be observed 71.

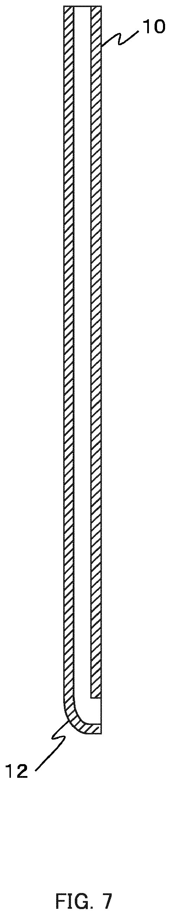

Fig. 7 is a sectional diagram (a sectional diagram showing the guide tube 10 cut along a face in the lengthwise direction thereof so to include the tube axis) illustrating a guide tube 10 shown as the second embodiment configured to avoid the circumstances given above. As illustrated in Fig. 7, a curved part 12 that deflects the direction in which the cable 2 advances is provided proximate the tip end of the guide tube 10.

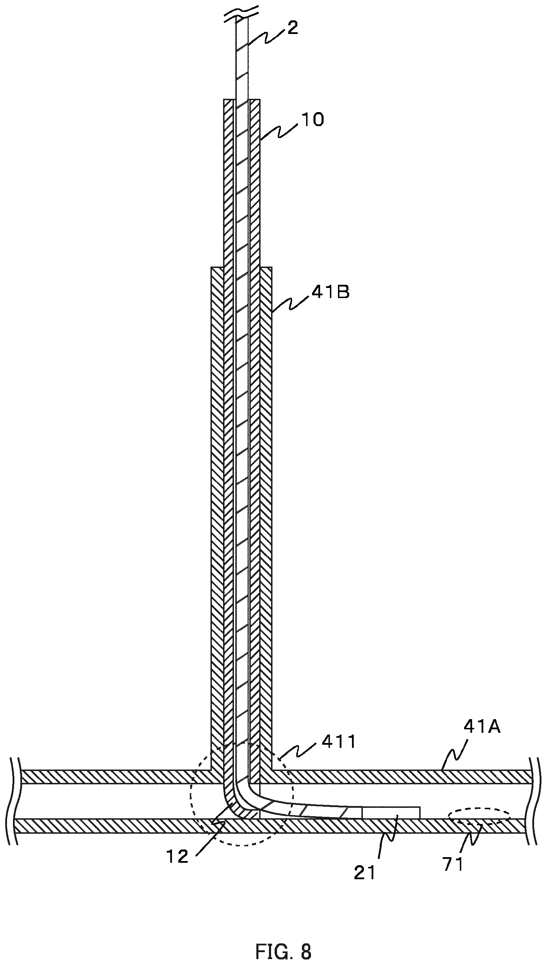

The advancement direction of the cable 2 is deflected to the direction toward the portion to be observed 71 at the curved part 12 when using this guide tube 10 as illustrated in Fig. 8. Therefore, the tip end of the cable 2 can be made to smoothly approach the portion to be observed 71 by an operation of pushing in the cable 2 from outside the tube.

The cable 2 usually includes at the tip end thereof a stiff portion (a cylindrical metal case surrounding the circumference of the observation image capturing part 21 in the present example which is hereinafter called "stiff portion 22") that lacks flexibility and that has a predetermine length (e.g., about 10 to 15 mm) for protecting the observation image capturing part 21 and the like. This stiff portion 22 may get stuck at the curved part 12 preventing the cable 2 from advancing. For such reason, it is recommended that the inside tube diameter at the curved part 12, for example, can be widened to allow the stiff portion 22 to smoothly pass through the curved part 12 when the cable includes such stiff portion 22.

In this case, the inside tube diameter of the guide tube 10 at the curved part 12 can be appropriately set using, for example, the following relation. Specifically, with reference to Fig. 9, when the wall thickness of the guide tube 10 is set to "t", the internal diameter of the pipe 41A is set to "a", the outside diameter of the guide tube 10 is set to "b" (so the internal diameter of the guide tube 10 is "b-2t"), the angle formed by the central axis of the stiff portion 22 (central axis of the observation image capturing part 21) and the central axis of the pipe 41A is set to "θ", the length of the stiff portion 22 (not deformable) is set to "L", the margin length required for bending the cable 2 at the rear of the stiff portion 22 positioned at the tip end of the cable is set to "α", and the diameter of the stiff portion 22 is set to "d", the following equation needs to be satisfied between the above variables for allowing the stiff portion 22 to pass through.

```
L + α <

   ((a – d * cosθ – t) / sinθ + (b – d) / sinθ – t) / cosθ)) min
```

Therefore, the inner tube diameter "b" of the guide tube 10 at the curved part 12 should satisfy the above equation.

And when the stiff portion 22 is included at a mid-part of the cable, the inner tube diameter "b" of the guide tube 10 at the curved part 12 should satisfy the following equation.

```
L + 2α <

   ((a – d * cosθ – t) / sinθ + (b – d) / sinθ – t) / cosθ)) min
```

By the way, the internal diameter of the guide tube 10 may be made to continuously change from the internal diameter of other parts (besides those proximate the curved part 12) to the internal diameter proximate the curved part 12 so that the cable 2 can be smoothly passed through the curved part 12.

Further, for example, the tube axis of the tube interior of the guide tube 10 may be decentered toward the direction opposite the direction in which the cable 2 is deflected by the action of the curved part 12, at a portion besides that proximate the curved part 12 (proximate the tip end), as illustrated in Fig. 10. In this way, the radius of curvature of the cable 2 that bends at the curved part 12 can be maximized so to reduce the friction between the cable 2 and the wall face of the pipe bore of the pipe 41 to thereby allow the cable 2 to be further smoothly inserted into the pipe bore.

<Third Embodiment>

Fig. 11 is a sectional diagram (a sectional diagram showing the guide tube 10 cut along a face in the lengthwise direction thereof so to include the tube axis) illustrating a guide tube 10 shown as the third embodiment. As illustrated in Fig. 11, the guide tube 10 of the third embodiment is a double-layered tube structure including an outside tube 10A and an inside tube 10B that is inserted into the outside tube 10A. The outside diameter of the outside tube 10A is substantially equal to the internal diameter of the pipe 41 to a degree that the guide tube 10 can be inserted in the pipe bore of the pipe 41 through which the cable 2 is inserted, and the internal diameter of the outside tube 10A is substantially equal to the outside diameter of the inside tube 10B to a degree that the inside tube 10B can be inserted therein. Further, the inside tube 10B has the internal diameter thereof set to be substantially equal to the outside diameter of the cable 2 to a degree that the cable 2 can be inserted therein. Additionally, the tip end of the inside tube 10B has provided thereto a holding structure 15 (elastic tube, clip and the like) for holding the part proximate the tip end of the cable 2 that is inserted in the inside tube 10B.

The cable 2 inserted into the pipe 41 using the guide tube 10 of the third embodiment is performed in, for example, the following manner. To be specific, the user firstly inserts the cable 2 into the inside tube 10B and then fixes the tip end of the cable 2 (periphery of the observation image capturing part 21) using the holding structure 15, as shown in Fig. 12. Subsequently, the user inserts the outside tube 10A into the pipe bore of the pipe 41, as shown in Fig. 13. Thereafter, the user inserts the inside tube 10B into the tube interior of the outside tube 10A with the cable 2 in a fixed state, as shown in Fig. 14.

Since the tip end of the cable 2 is fixed to the tip end of the inside tube 10B with the holding structure 15 in the above case, the pushing force applied when pushing the inside tube 10B into the tube interior of the outside tube 10A is effectively transmitted to a part proximate the tip end of the cable 2. Hereby, the cable 2 can be made to easily approach the portion to be observed 70 without the cable 2 bending.

The above described embodiments are simply for facilitating the understanding of the present invention and are not in any way to be construed as limiting the present invention. It is a matter of course that the present invention may variously be changed or altered without departing from its spirit and encompasses equivalents thereof.

[Reference Signs List]

1 internal observation device, 2 cable, 3 main device, 5 display device, 6 input device, 10 guide tube, 11 tube interior, 12 curved part, 15 holding structure, 21 observation image capturing part, 22 stiff portion, 40 pipelike structure, 41 pipe, 41A, 41B pipe, 70, 71 portion to be observed

**Claims**

1. A guide tube that guides a cable of an internal observation device, comprising:

   the guide tube assisting to insert into a pipe bore a cable of an internal observation device, the cable being pushed into the pipe bore to force an observation image capturing part provided proximate a tip end of the cable to approach a portion to be observed when performing internal observation of the pipe bore of a pipelike structure with the internal observation device; and
   an outside diameter of the guide tube that is substantially equal to an internal diameter of the pipe bore to a degree that the guide tube can be inserted in the pipe bore, and an internal diameter of the guide tube that is substantially equal to an outside diameter of the cable to a degree that the cable can be inserted therein.

2. A guide tube that guides a cable of an internal observation device according to claim 1, wherein
   a curved part is included proximate a tip end of the guide tube, the curved part being configured to deflect a direction in which the tip end of the cable that is inserted in a tube interior of the guide tube is directed.

3. A guide tube that guides a cable of an internal observation device according to claim 2, wherein
   an internal diameter proximate the curved part is made greater than internal diameters of other parts.

4. A guide tube that guides a cable of an internal observation device according to claim 3, wherein
   the internal diameter of the guide tube continuously changes from the internal diameter of other parts to the internal diameter proximate the curved part.

5. A guide tube that guides a cable of an internal observation device according to claim 2, wherein
   a tube axis of the tube interior is decentered toward a direction opposite the direction in which the tip end of the cable is deflected at a portion besides the portion proximate the tip end of the guide tube.

6. A guide tube that guides a cable of an internal observation device according to claim 1, wherein
   the guide tube includes an outside tube and an inside tube that is configured to be inserted in the outside tube,
   the outside tube has an outside diameter substantially equal to the internal diameter of the pipe bore to a degree that the outside tube can be inserted in the pipe bore, and an internal diameter of the outside tube is substantially equal to an outside diameter of the inside tube to a degree that the outside tube can have the inside tube inserted therein,
   the inside tube has an internal diameter substantially equal to the outside diameter of the cable to a degree that the cable can be inserted therein, and
   the inside tube has at a tip end thereof a holding structure for holding a part proximate the tip end of the cable that is inserted in a tube interior thereof.

7. A cable guiding method of an internal observation device, including inserting into a pipe bore the cable of the internal observation device, the cable being pushed into the pipe bore to force an observation image capturing part provided proximate a tip end of the cable to approach a portion to be observed when performing internal observation of the pipe bore of a pipelike structure with the internal observation device, comprising:

   inserting into the pipe bore a guide tube having an outside diameter that is substantially equal to an internal diameter of the pipe bore to a degree that the guide tube can be inserted in the pipe bore, and an internal diameter that is substantially equal to an outside diameter of the cable; and

inserting the cable into a tube interior of the guide tube from an outside of the pipe bore.

8. A cable guiding method according to claim 7, wherein
the guide tube includes a curved part proximate a tip end of the guide tube, the curved part being configured to deflect a direction in which the tip end of the cable that is inserted in the tube interior of the guide tube is directed.

9. A cable guiding method according to claim 8, wherein
a tube axis of the tube interior is decentered toward a direction opposite a direction in which the cable is deflected at a portion besides a portion proximate the tip end of the guide tube.

10. A cable guiding method according to claim 7, wherein
the guide tube includes an outside tube and an inside tube that is configured to be inserted in the outside tube,
the outside tube has an outside diameter substantially equal to the internal diameter of the pipe bore to a degree that the outside tube can be inserted in the pipe bore, and an internal diameter of the outside tube is substantially equal to an outside diameter of the inside tube to a degree that the outside tube can have the inside tube inserted therein,
the inside tube has an internal diameter substantially equal to the outside diameter of the cable to a degree that the cable can be inserted therein, and
the inside tube has at a tip end thereof a holding structure for holding a part proximate the tip end of the cable that is inserted in a tube interior thereof, the method further comprising
inserting the cable into the inside tube and holding with the holding structure the part proximate the tip end of the cable and
inserting into the outside tube the inside tube having the cable fixed thereto.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

| | International application No. |
|---|---|
| | PCT/JP2014/055616 |

| A. CLASSIFICATION OF SUBJECT MATTER |
|---|
| *G02B23/24*(2006.01)i, *G01N21/88*(2006.01)i |

According to International Patent Classification (IPC) or to both national classification and IPC

| B. FIELDS SEARCHED |
|---|
| Minimum documentation searched (classification system followed by classification symbols) |
| G02B23/24, G01N21/88 |

Documentation searched other than minimum documentation to the extent that such documents are included in the fields searched

Jitsuyo Shinan Koho    1922–1996   Jitsuyo Shinan Toroku Koho  1996–2014
Kokai Jitsuyo Shinan Koho  1971–2014   Toroku Jitsuyo Shinan Koho  1994–2014

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 10-132187 A (Hitachi, Ltd.),<br>22 May 1998 (22.05.1998),<br>claims; paragraphs [0017] to [0030]; fig. 2 to 5<br>(Family: none) | 1,6,7,10<br>2-5,8,9 |
| Y<br>A | JP 2010-57598 A (Olympus Corp.),<br>18 March 2010 (18.03.2010),<br>claims; paragraphs [0002], [0018], [0037]<br>(Family: none) | 1,6,7,10<br>2-5,8,9 |
| Y<br>A | JP 2012-14128 A (Olympus Corp.),<br>19 January 2012 (19.01.2012),<br>claims; paragraphs [0001], [0018] to [0044]; fig. 1<br>(Family: none) | 1,2,6-8,10<br>3-5,9 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 May, 2014 (30.05.14) | 10 June, 2014 (10.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/055616

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2010-26391 A (Olympus Corp.),<br>04 February 2010 (04.02.2010),<br>claims; paragraphs [0002], [0003]; each<br>carrying-out mode; fig. 1, 2<br>(Family: none) | 1,2,6-8,10<br>3-5,9 |

Form PCT/ISA/210 (continuation of second sheet) (July 2009)

**EP 3 115 825 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10132187 B